(19) Europäisches Patentamt / European Patent Office / Office européen des brevets

(11) **EP 2 715 885 B1**

(12) **FASCICULE DE BREVET EUROPEEN**

(45) Date de publication et mention de la délivrance du brevet:
**29.07.2015 Bulletin 2015/31**

(21) Numéro de dépôt: **12726877.9**

(22) Date de dépôt: **29.05.2012**

(51) Int Cl.:
*H01S 3/00* (2006.01)        *H01S 3/23* (2006.01)
*G02F 1/35* (2006.01)

(86) Numéro de dépôt international:
**PCT/IB2012/052674**

(87) Numéro de publication internationale:
**WO 2012/164483 (06.12.2012 Gazette 2012/49)**

(54) **PROCÉDÉ ET DISPOSITIF DE GÉNÉRATION D'IMPULSIONS ATTOSECONDES ISOLÉES**

VERFAHREN UND VORRICHTUNG ZUR ERZEUGUNG ISOLIERTER ATTOSEKUNDENIMPULSE

METHOD AND DEVICE FOR GENERATING ISOLATED ATTOSECOND PULSES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.06.2011 FR 1154835**

(43) Date de publication de la demande:
**09.04.2014 Bulletin 2014/15**

(73) Titulaire: **Commissariat à l'Énergie Atomique et aux Énergies Alternatives
75015 Paris (FR)**

(72) Inventeurs:
  • **QUERE, Fabien**
    **F-78140 Vélizy-Villacoublay (FR)**
  • **VINCENTI, Henri**
    **F-20232 Poggio d'Oletta (FR)**

(74) Mandataire: **Reboussin, Yohann Mickaël Noël et al
Cabinet Orès
36, rue de St Pétersbourg
75008 Paris (FR)**

(56) Documents cités:
  • H. VINCENTI ET AL: "Attosecond Lighthouses: How To Use Spatiotemporally Coupled Light Fields To Generate Isolated Attosecond Pulses", PHYSICAL REVIEW LETTERS, vol. 108, no. 11, 1 mars 2012 (2012-03-01), XP55039780, ISSN: 0031-9007, DOI: 10.1103/PhysRevLett.108.113904

  • G. SANSONE ET AL: "Isolated Single-Cycle Attosecond Pulses", SCIENCE, vol. 314, no. 5798, 20 octobre 2006 (2006-10-20), pages 443-446, XP055020835, ISSN: 0036-8075, DOI: 10.1126/science.1132838 cité dans la demande

  • YI WU ET AL: "Isolated Attosecond Pulses Generated Directly from a Femtosecond Chirped Pulse Amplifier", 2010 CONFERENCE ON LASERS AND ELECTRO-OPTICS (CLEO) IEEE PISCATAWAY, NJ, USA, 2010, page 2 PP., XP002670741, ISBN: 978-1-55752-890-2

  • AKTURK S ET AL: "Spatio-temporal couplings in ultrashort laser pulses", JOURNAL OF OPTICS IOP PUBLISHING LTD. UK, vol. 12, no. 9, 27 août 2010 (2010-08-27), XP002670743, ISSN: 2040-8978 cité dans la demande

  • C. THAURY ET AL: "High-order harmonic generation from plasma mirrors", THE EUROPEAN PHYSICAL JOURNAL SPECIAL TOPICS, vol. 175, no. 1, 1 août 2009 (2009-08-01), pages 43-48, XP055020799, ISSN: 1951-6355, DOI: 10.1140/epjst/e2009-01115-6

  • WYATT A S ET AL: "Characterizing spatio-temporal coupling of extreme ultraviolet ultrashort pulses from high harmonic generation", CLEO '07. 2007 CONFERENCE ON LASERS AND ELECTRO-OPTICS 5-11 MAY 2007 BALTIMORE, MD, USA, OSA, PISCATAWAY, NJ, USA, 6 mai 2007 (2007-05-06), pages 1-2, XP031231435, ISBN: 978-1-55752-834-6

**Description**

L'invention porte sur un procédé et un dispositif de génération d'impulsions « attosecondes » isolées. L'invention porte également sur un procédé et un dispositif utilisant la génération d'impulsions « attosecondes » pour déterminer la phase de la porteuse d'une impulsion laser ultrabrève par rapport à son enveloppe ou pour déterminer les variations de ladite phase.

On entend par « impulsion attoseconde » une impulsion de lumière présentant une durée inférieure à une femtoseconde (1fs=$10^{-15}$). A l'heure actuelle, ces impulsions ont typiquement des durées de l'ordre de quelques centaines, voire de quelques dizaines d'attosecondes (1as=$10^{-18}$s). Dans le cadre de cette définition, la durée d'une impulsion est définie comme la largeur à 1/e de son profil d'intensité. Le terme « lumière » doit être entendu au sens large ; en effet, le spectre d'une impulsion « attoseconde » s'étend principalement dans l'ultraviolet, voire dans l'ultraviolet extrême ou dans la région des rayons X mous. Dans la suite, on utilisera les expressions « impulsion attoseconde » et « impulsion de durée sub-femtoseconde » de manière interchangeable. On entend par « impulsions ultra-brèves » des impulsions « picosecondes », de durée inférieure ou égale à 1000 ps (1ps=$10^{-12}$ s), ou des impulsions « femtosecondes », de durée inférieure ou égale à 100 fs.

Ces définitions sont largement admises dans le domaine de l'optique ultrarapide.

La génération d'impulsions laser ultra-brèves constitue un outil irremplaçable pour l'étude résolue en temps de phénomènes physico-chimiques rapides dans les atomes, les molécules et la matière condensée. Depuis l'invention des lasers fonctionnant en régime de verrouillage de modes, dans les années '60 du vingtième siècle, la génération d'impulsions laser dont la durée s'exprime en picosecondes ou en femtosecondes a permis notamment l'étude de la dynamique des réactions chimiques et l'observation « en temps réel » des vibrations moléculaires. A ce jour l'utilisation de lasers à titane-saphir fonctionnant en verrouillage de phase passif à lentille de Kerr, associés si nécessaire à des techniques non-linéaires de compression hors-cavité, permet d'obtenir des impulsions laser dans le proche infrarouge (longueur d'onde à centre bande d'environ 800 nm) présentant une durée inférieure à 5 fs. Etant donné que la période optique à une longueur d'onde de 800 nm est d'environ 2,5 fs, on comprend que de telles impulsions sont constituées de peu de cycles optiques - par abus de langage on parle même d'impulsions « à cycle unique ». L'article de G. Steinmeyer et al. « Frontiers in Ultrashort Pulse Génération: Pushing the Limits in Linear and Nonlinear Optics », Science, Vol. 286, 19 novembre 1999, pages 1507 - 1512 illustre les principales techniques de génération d'impulsions laser « femtosecondes ». On peut aussi se rapporter à l'article de T. Brabec et F. Krausz « Intense few-cycles fields : Frontiers of nonlinear optics » Reviews of Modern Physics 72 (2): 545-591.

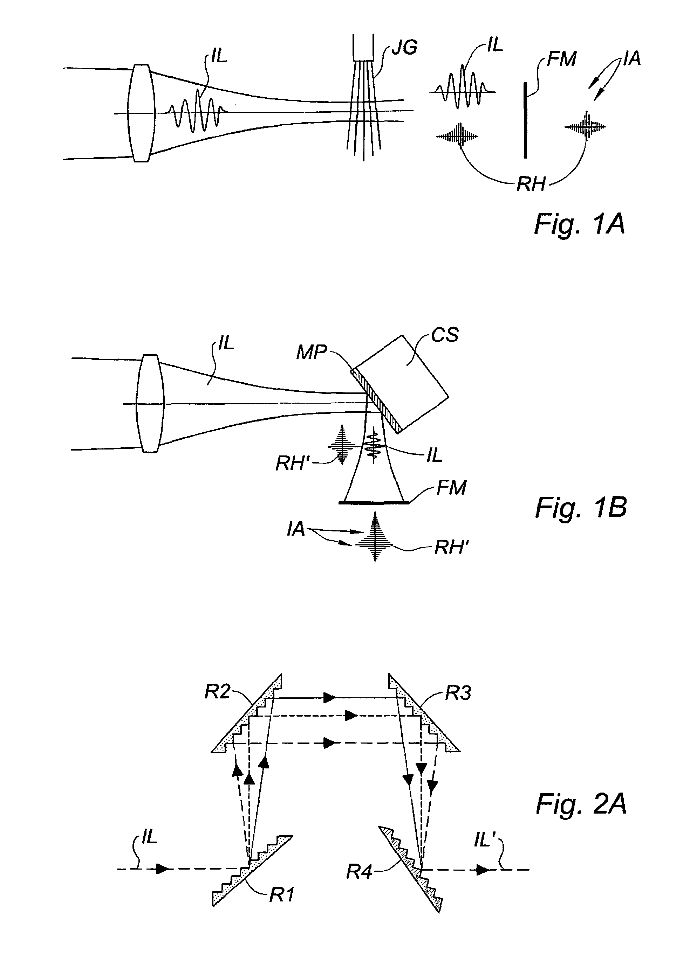

L'étude de phénomènes encore plus rapides, tels que les déplacements des électrons à l'intérieur des atomes ou des molécules, nécessite des impulsions encore plus brèves, à l'échelle « attoseconde ». Ces impulsions, dont le spectre s'étend principalement de l'ultraviolet aux rayons X mous, ne sont pas générées directement par des oscillateurs laser, mais par l'intermédiaire d'interactions hautement non-linéaires entre des impulsions laser picosecondes ou femtosecondes à haute intensité (typiquement à des intensités supérieures ou égales à $10^{13}$ W/cm$^2$) et la matière. La première technique qui a permis la génération d'impulsions « attosecondes » est la génération d'harmoniques d'ordre élevé dans un gaz (HHG, de l'anglais High-order Harmonie Generation), illustrée schématiquement sur la figure 1A. Lorsqu'on focalise une impulsion laser IL dans - ou à proximité de - un jet de gaz JG (typiquement un gaz noble tel que l'argon, le néon ou l'hélium, même si des gaz moléculaires ont également été utilisés), on observe la génération d'un rayonnement harmonique RH, contenant des harmoniques impaires du rayonnement incident, s'étendant jusqu'à des ordres beaucoup plus élevés que ce qu'on pourrait attendre sur la base d'une approche perturbative conventionnelle - parfois même supérieurs à 100. Ce phénomène admet une interprétation semi-classique : le champ laser intense provoque d'abord une ionisation du gaz par absorption multi-photonique, effet tunnel voire suppression de la barrière coulombienne ; puis les électrons ainsi libérés se propagent dans le champ laser en acquérant de l'énergie cinétique ; enfin, certains d'entre eux se recombinent avec les ions positifs du gaz tout en émettant un photon ultraviolet ou même X. Cette interprétation suggère que l'émission du rayonnement « harmonique » RH se fait sous la forme d'un train d'impulsions attosecondes IA, émises à chaque demi-période du rayonnement laser incident. Et en effet, cela a été démontré en 2001 par P. M. Paul et al : « Observation of a train of attosecond pulses from high harmonic generation » Science 292, 1689 (2001).

Le rayonnement harmonique RH se propage de manière colinéaire à l'impulsion laser génératrice IL, qui est beaucoup plus intense mais qui peut être éliminée, par exemple par un filtre passe-bande métallique FM. En variante ou en complément, les différentes composantes spectrales peuvent être séparée par un premier réseau de diffraction et certaines d'entre elles être recombinées par un deuxième réseau identique (non représenté).

L'énergie des impulsions attosecondes obtenues par HHG est limitée par la faible efficacité du processus. Par ailleurs, l'énergie de l'impulsion laser incidente ne peut pas être augmentée indéfiniment, sous peine de provoquer une ionisation complète du gaz avant même que le pic de ladite impulsion soit atteint.

Une autre technique de génération d'impulsions attosecondes, illustrée schématiquement sur la figure 1B, exploite ce qu'on appelle un « miroir plasma ». Lorsqu'une impulsion laser ultra-brève IL (picoseconde ou femtoseconde) rencontre une cible solide CS, elle génère une couche de plasma très dense MP - pratiquement à la densité du solide, car le plasma n'a pas le temps de diffuser de manière perceptible vers le vide dans un temps d'interaction aussi bref - et donc très réfléchissante. A cause de différents effets physiques (ondes de sillage dans le plasma, à des intensités relativement modérées ; effet Doppler induit par les électrons du plasma oscillant sous l'influence du champ laser, à des intensités plus importantes, supérieures à $10^{18}$ W/cm$^2$ pour un laser centré à 800 nm) le rayonnement réfléchi contient aussi des harmoniques RH'- d'ordres pairs et impairs - du rayonnement incident. Comme dans le cas de l'HHG dans un gaz, le rayonnement « harmonique » est constitué d'un train d'impulsions attosecondes IA. La physique sous-jacente à ces processus a été étudiée et est par exemple détaillée dans C. Thaury et al. « Plasma mirrors for ultrahigh-intensity optics », Nature Physics, Vol. 3, pages 424 - 429, Juin 2007; et C. Thaury et F. Quéré, « High-order harmonic and attosecond pulse generation on plasma mirrors: basic mechanisms », J. Phys. B: At. Mol. Opt. Phys. 43 213001 (2010). La première mise en évidence expérimentale d'impulsions attosecondes générées sur miroir plasma a été présentée dans Y. Nomura, et al. « Attosecond phase locking of harmonics emitted from laser-produced plasmas » Nature Phys. 5, 124-128 (2009).

Le filtrage du rayonnement harmonique contenu dans le rayonnement réfléchi par le miroir plasma peut se faire comme dans le cas de l'HHG dans un gaz.

La technique du miroir plasma est prometteuse car elle permet d'exploiter des impulsions laser d'énergies plus élevées que celles qui peuvent être utilisées efficacement en HHG, et donc d'obtenir des impulsions attosecondes plus énergétiques et/ou de plus petite longueur d'onde.

S'il est relativement facile de générer des trains d'impulsions attosecondes, avec une fréquence de répétition extrêmement élevée, la génération d'impulsions attosecondes isolées est beaucoup plus difficile. Ce problème a fait l'objet de nombreuses recherches depuis le milieu des années 1990. Il a été résolu expérimentalement pour la première fois au début des années 2000, mais a continué à susciter depuis de nombreux travaux, notamment pour élaborer des techniques de génération plus simples et/ou plus efficaces.

Une première possibilité consiste à utiliser des impulsions laser génératrices extrêmement brèves, comprenant peu de cycles optiques, et à sélectionner uniquement la partie à plus petite longueur d'onde du spectre d'harmoniques. Cette technique a notamment été utilisée pour la HHG dans les gaz par E. Goulielmakis et al, « Single-Cycle Nonlinear Optics », Science (2008) Vol. 320 no. 5883 pp. 1614-1617. Cependant, les impulsions laser de durée aussi brève sont relativement peu énergétiques (généralement moins d'un milli-joule), ce qui limite à son tour l'énergie des impulsions attosecondes ainsi obtenues.

Une autre possibilité qui, elle aussi, a été appliquée uniquement à l'HHG dans les gaz, consiste à utiliser une impulsion laser présentant un état de polarisation rapidement variable dans le temps, de manière à générer un rayonnement seulement pendant une fraction de sa durée (en effet, l'HHG dans les gaz présuppose une polarisation linéaire ; une très faible ellipticité suffit pour empêcher la recombinaison des électrons et donc la génération d'harmoniques). Cette technique, exploitée par G. Sansone et al, Isolated Single-Cycle Attosecond Pulses, Science (2006): Vol. 314 no. 5798 pp. 443-446, est assez complexe à mettre en oeuvre. En outre, il est très difficile de manipuler l'état de polarisation d'une impulsion laser de forte énergie.

D'autres techniques plus complexes combinent une polarisation variable et une excitation laser à deux couleurs. Elles présentent sensiblement les mêmes inconvénients que les techniques mentionnées plus haut.

Pour un exposé de l'état de la technique en matière de génération d'impulsions attosecondes on peut se rapporter à l'article suivant :

-    F. Krausz and M. Ivanov, « Attosecond Physics », Rev. Mod. Phys. 81, 163-234 (2009).

A ce jour, des impulsions attosecondes isolées ont été générées uniquement par HHG dans un gaz.

Un but de l'invention est de procurer un procédé pour la génération d'impulsions attosecondes isolées qui soit plus simple que les procédés connus à ce jour, adapté tant à l'HHG dans un gaz qu'à la technique du miroir plasma et permettant l'utilisation d'impulsions laser d'énergie élevée. On entend par « impulsion isolée » une impulsion qui :

-    présente éventuellement des impulsions satellites dont l'intensité maximale et l'énergie sont inférieures d'au moins un facteur 10 à celles de ladite impulsion (en effet, il n'est généralement pas possible de s'affranchir complètement de telles impulsions satellites) ; et
-    est séparée de toute autre impulsion d'intensité et/ou énergie comparables par un intervalle temporel supérieur d'au moins un facteur 1000 à sa durée.

Conformément à l'invention, un tel but est atteint par un procédé de génération d'impulsions de lumière isolées de durée sub-femtoseconde comprenant les étapes consistant à :

   a. générer au moins une impulsion laser de durée pico- ou femto-seconde ;

b. introduire un couplage spatio-temporel de ladite impulsion laser, se traduisant par une rotation temporelle de ses fronts d'onde après focalisation ;

c. focaliser ladite impulsion laser sur une cible, moyennant quoi un train d'impulsions de lumière de durée sub-femtoseconde est généré, dans lequel chaque impulsion se propage selon une direction différente ;

d. isoler une dite impulsion de lumière par filtrage spatial.

Selon différents modes de réalisation du procédé de l'invention :

- Ladite étape b. peut comprendre l'introduction d'un couplage spatio-temporel de type inclinaison du front d'impulsion avant focalisation.
- Ladite étape b. peut être mise en oeuvre au moyen d'un élément dispersif introduisant une dispersion angulaire non compensée. En particulier, il peut s'agir d'une ligne à retard dispersive comprenant une pluralité d'éléments dispersifs dont au moins un est désaligné intentionnellement.
- Ladite cible peut être un jet de gaz, ou bien un corps solide ou liquide (ou plus généralement, condensé) formant un miroir plasma.
- Ladite étape c. peut comprendre la focalisation de ladite impulsion laser jusqu'à une intensité supérieure ou égale à $10^{13}$ W/cm$^2$.
- Au niveau de ladite cible, ladite impulsion laser peut présenter une rotation de son front d'onde à une vitesse supérieure ou égale à 1 mrad/fs.

Un autre objet de l'invention est un dispositif de génération d'impulsions de lumière isolées de durée sub-femtoseconde comprenant :

- un moyen pour introduire un couplage spatio-temporel d'au moins une impulsion laser de durée pico- ou femto-seconde ;
- un système optique pour focaliser ladite impulsion laser sur une cible ; et
- un filtre spatial pour sélectionner une impulsion de lumière de durée sub-femtoseconde générée par ladite cible.

Selon différents modes de réalisation :

- Un tel dispositif peut comprendre également une cible adaptée pour générer un train d'impulsions de lumière de durée sub-femtoseconde lorsqu'elle est éclairée par une impulsion laser de durée pico-ou femtoseconde.
- Ladite cible peut être choisie parmi un jet de gaz et un corps solide ou liquide (ou plus généralement, condensé) formant un miroir plasma.
- Ledit moyen pour introduire un couplage spatio-temporel d'au moins une impulsion laser de durée pico- ou femto-seconde peut comporter un élément dispersif introduisant une dispersion angulaire non compensée. En particulier il peut s'agir d'une ligne à retard dispersive comprenant au moins deux éléments dispersifs, avec un désalignement intentionnel.

Le principe à la base de l'invention peut être utilisé pour déterminer la phase d'une impulsion laser femtosecondes par rapport à son enveloppe. Il s'agit là d'un paramètre très difficile à mesurer, mais important pour caractériser complètement des impulsions laser comprenant un nombre réduit de cycles optiques. Ainsi, un autre objet de l'invention est un procédé de détermination de la phase de la porteuse d'une impulsion laser de durée pico- ou femtoseconde par rapport à son enveloppe comprenant les étapes consistant à :

i. introduire un couplage spatio-temporel de ladite impulsion laser, se traduisant par une rotation temporelle de ses fronts d'onde après focalisation ;

ii. focaliser ladite impulsion laser sur une cible pour générer un rayonnement harmonique ;

iii. mesurer le profil spatial en champ lointain dudit rayonnement harmonique et en déduire une information sur la phase de la porteuse de ladite impulsion laser par rapport à son enveloppe.

Encore un autre objet de l'invention est un dispositif de détermination de la phase de la porteuse une impulsion laser de durée pico-ou femtoseconde par rapport à son enveloppe comprenant :

- un moyen pour introduire un couplage spatio-temporel de ladite impulsion laser;
- un système optique pour focaliser ladite impulsion laser sur une cible pour générer un rayonnement harmonique ;
- un moyen de mesure du profil spatial en champ lointain dudit rayonnement harmonique ; et
- un moyen de traitement des données pour en déduire une information sur la phase de la porteuse de ladite impulsion laser par rapport à son enveloppe.

D'autres caractéristiques, détails et avantages de l'invention ressortiront à la lecture de la description faite en référence aux dessins annexés donnés à titre d'exemple et qui représentent, respectivement :

- Les figures 1A et 1B, décrites plus haut, la mise en oeuvre de deux techniques connues de l'art antérieur de génération de trains d'impulsions attosecondes ;
- Les figures 2A et 2B, une ligne à retard dispersive, respectivement alignée (figure 2A) et désalignée intentionnellement pour introduire un couplage spatio-temporel de type inclinaison du front d'impulsion dans une impulsion laser (figure 2B) ;
- La figure 3, une représentation spatio-temporelle d'une impulsion laser ultra-brève présentant un couplage spatio-temporel de type « inclinaison du front d'impulsion » ;
- La figure 4, une représentation spatio-spectrale d'une impulsion ultra-brève présentant un « chirp » spatial, obtenue par focalisation de l'impulsion de la figure 3 ;
- La figure 5, une représentation spatio-temporelle de l'impulsion de la figure 4, mettant en évidence la rotation des fronts d'onde qui traduit, dans le domaine temporel, son « chirp » spatial ;
- Les figures 6A, 6B et 6C, respectivement, une représentation spatio-temporelle du champ électrique du rayonnement émis par une cible solide interagissant avec une impulsion laser ultra-brève sans couplage spatio-temporel ; sa transformée de Fourier bidimensionnel ; et un instantané des impulsions attosecondes obtenues par filtrage spectral dudit rayonnement ;
- Les figures 7A, 7B et 7C, respectivement, une représentation spatio-temporelle du champ électrique du rayonnement émis par une cible solide interagissant avec une impulsion laser ultra-brève présentant une rotation des fronts d'onde de 3,2 mrad/fs ; sa transformée de Fourier bidimensionnel ; et une instantanée des impulsions attosecondes obtenues par filtrage spectral dudit rayonnement harmonique entre les ordres 70 et 80 ;
- Les figures 8A, 8B et 8C, respectivement, une représentation spatio-temporelle du champ électrique du rayonnement émis par une cible solide interagissant avec une impulsion laser ultra-brève présentant une rotation des fronts d'onde de 7 mrad/fs ; sa transformée de Fourier bidimensionnel ; et une instantanée des impulsions attosecondes obtenues par filtrage spectral dudit rayonnement harmonique entre les ordres 70 et 80 ;
- La figure 9, une représentation schématique d'un dispositif de génération d'impulsions de lumière isolées de durée sub-femtoseconde selon l'invention ;
- Les figures 10A et 10B, deux impulsions laser ultra-rapides caractérisées par deux valeurs différentes de la phase de la porteuse par rapport à l'enveloppe ; et
- La figure 11 montre le profil spatial en champ lointain du rayonnement harmonique généré par deux impulsions différant uniquement par leur valeur de la phase de la porteuse par rapport à l'enveloppe.

Comme cela a été expliqué plus haut, en focalisant une impulsion laser ultra-brève et intense sur une cible solide ou gazeuse il est possible de générer un train d'impulsions attosecondes, qui sont émises à une cadence extrêmement élevée (une ou deux impulsions par cycle optique). Il n'est pas possible de réaliser un « obturateur » assez rapide pour isoler une de ces impulsions, et les techniques connues de l'art antérieur permettant la génération d'impulsions attosecondes isolées sont très complexes à mettre en oeuvre et/ou imposent des limitations en énergie.

Les inventeurs ont découvert que, dans certaines conditions, une impulsion laser ultra-rapide présentant un « couplage spatio-temporel » permet de générer des impulsions attosecondes qui se propagent dans des directions légèrement différentes les unes des autres. Une de ces impulsions peut alors être sélectionnée par un simple filtrage spatial.

La notion de couplage spatio-temporel est bien connue dans le domaine de l'optique ultra-rapide. On dit qu'une impulsion laser présente un couplage spatio-temporel (ou « STC » de l'anglais « spatio-temporal coupling ») lorsque son champ électrique $E(x,y,z=z_0,t)$ - où x,y sont les coordonnées spatiales normales à la direction de propagation z et t est le temps - ne peut pas être écrit sous la forme : $E(x,y,z=z_0,t)= E_1(t)\cdot E_2(x,y;z=z_0)$. En d'autres termes, lorsqu'une impulsion présente un couplage spatio-temporel, ses propriétés spatiales dépendent du temps et réciproquement, son profil temporel dépend de la position dans le plan x,y. Les couplages spatio-temporels sont généralement considérés comme une nuisance, car ils diminuent l'intensité de pic des impulsions focalisées et compliquent l'interprétation des résultats des expériences ; on cherche donc à les minimiser, bien qu'ils ne puissent généralement pas être supprimés complètement. Pour des exposés détaillés de la théorie des couplages spatio-temporels et des techniques expérimentales permettant de les caractériser, on peut se rapporter aux articles suivants de S. Akturk et al. :

- « Spatio-Temporal Couplings in Ultrashort Pulses », Journal of Optics 12, 093001 (2010).
- « The general theory of first-order spatio-temporal distortions of Gaussian pulses and beams », Optics Express, Vol. 13, No. 21, 17 octobre 2005, pages 8642 - 8659.

Comme cela est expliqué dans les articles précités, il existe différents types de couplages spatio-temporels ; l'invention se base en particulier sur le couplage dit « rotation des fronts d'onde » (WFR, de l'anglais « Wave Front Rotation »). Dans le cas le plus simple, une impulsion présentant un STC de ce type peut s'écrire sous la forme suivante :

$$E(x,y,z=z_0,t)= E_t(t) \cdot E_{xy}(x,y) \cdot exp(i\Theta xt) \cdot exp(i\omega_L t) \qquad (1)$$

où :

- $E_t(t)$ représente le profil temporel de l'impulsion (par exemple, gaussien) ;
- $E_{xy}(t)$ représente le profil spatial du faisceau (par exemple, gaussien) ;
- $exp(i\omega_L t)$ représente la porteuse à la fréquence de centre bande $\omega_L$, i étant l'unité imaginaire et « exp » la fonction exponentielle ; et
- $exp(i\Theta xt)$ est le terme de couplage, indiquant que le front d'onde instantané, et donc la direction instantanée de propagation de la lumière, varie dans le temps pendant la durée de l'impulsion. Le paramètre $\Theta$ peut être écrit : $\Theta=k \cdot v_r$ où k est le nombre d'onde (k=$2\pi/\lambda$, $\lambda$ étant la longueur d'onde laser) et $v_r$ la vitesse de rotation instantanée des fronts d'onde - considéré ici indépendante du temps et de la position ici - typiquement exprimée en milliradians par femtoseconde (mrad/fs).

On peut imaginer des cas plus complexes, où par exemple la vitesse de rotation des fronts d'onde ne serait pas constante.

Quel que soit le mécanisme physique utilisé - HHG dans un gaz ou réflexion par un miroir plasma - la génération d'impulsions attosecondes est un processus cohérent. Cela implique, en particulier, que chaque impulsion attoseconde se propage dans la même direction que l'impulsion laser au moment de sa génération. On comprend donc que si une impulsion laser présentant un couplage spatio-temporel de type WFR est utilisée pour générer des impulsions attosecondes, ces dernières présenteront des directions de propagation différentes les unes des autres. Les inventeurs ont appelé cet effet « *phare attoseconde* », par analogie avec un phare maritime qui tourne pendant qu'il émet un signal lumineux.

En raison de la nature cohérente du processus de génération, en outre, les impulsions attosecondes présentent généralement une faible divergence (de l'ordre de quelques milliradians ou moins). Par conséquent, si la vitesse de rotation $v_r$ des fronts d'onde de l'impulsion laser génératrice est suffisamment élevée, il devient possible d'isoler différentes impulsions attosecondes par filtrage spatial.

Cela sera démontré plus loin de manière quantitative. Pour l'instant, il importe de montrer comment des impulsions présentant un couplage spatio-temporel du type WFR peuvent être obtenues en pratique.

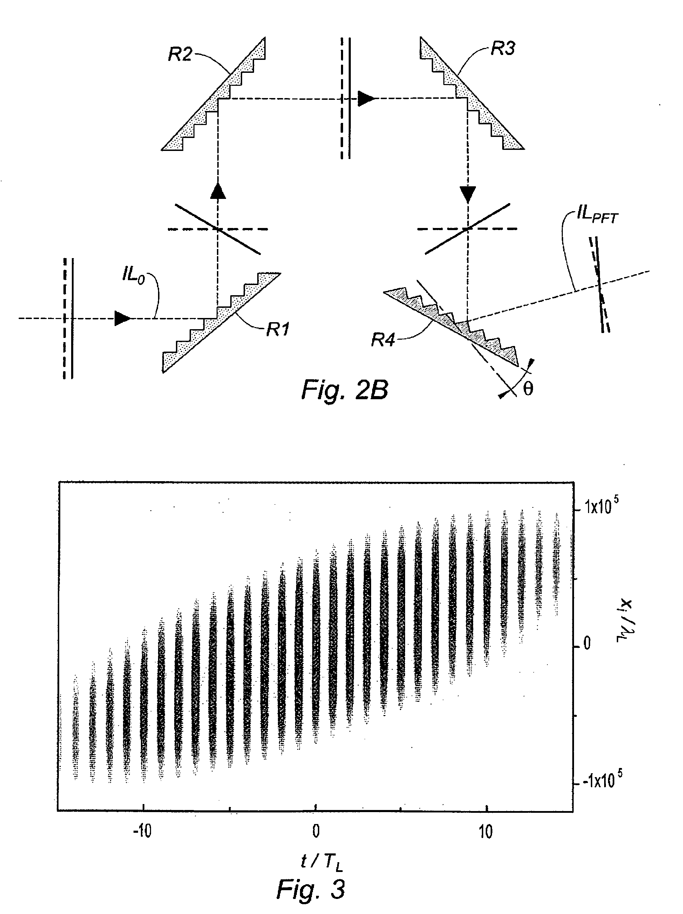

La figure 2A montre une ligne à retard dispersive à quatre réseaux de diffraction, qui est un dispositif communément utilisé en optique ultrarapide. La ligne à retard dispersive est constituée de quatre réseaux de diffraction identiques, R1, R2, R3 et R4, parallèles deux à deux. Une impulsion laser $IL_0$, polychromatique comme toute impulsion ultra-rapide, arrive de la gauche et est diffractée en réflexion par le premier réseau R1, qui introduit une dispersion angulaire : les différentes composantes spectrales du rayonnement diffracté se propagent ainsi selon des angles différents. Le deuxième réseau R2 introduit une dispersion spectrale opposée, de telle sorte que les différentes composantes spectrales se propagent à nouveau dans une même direction, mais avec un décalage spatial dans une direction transversale (car l'impulsion présente une étendue spatiale finie : il s'agit d'un faisceau-impulsion) ; c'est ce qu'on appelle un « chirp spatial ». La deuxième paire de réseaux, R3 et R4, introduit de la même manière un décalage spatial opposé. Ainsi, à la sortie de la ligne à retard, les différentes composantes spectrales se retrouvent à nouveau recombinées en un seul faisceau. L'impulsion de sortie IL' n'est cependant pas identique à l'impulsion $IL_0$ d'entrée : ses différentes composantes spectrales ont suivi des parcours de longueurs différentes et ont donc acquis une phase différente, comme si elles avaient traversé un milieu matériel dispersif. Une première ligne du type de la figure 2 (« étireur ») est typiquement utilisée pour étirer une impulsion laser préalablement à son amplification, puis une deuxième ligne dispersive (« compresseur ») est utilisée pour comprimer l'impulsion amplifiée (amplification d'impulsions à dérive de fréquence, ou CPA de l'anglais « chirped pulse amplification »). En variante, des prismes peuvent être utilisés en remplacement des réseaux de diffraction. D'autres montages, comportant éventuellement des lentilles et/ou des miroirs, existent, mais tous comprennent au moins deux éléments dispersifs alignés de manière à introduire des dispersions angulaires opposées.

La ligne à retard de la figure 2B se différencie de celle de la figure 2A seulement en ce que le dernier réseau de diffraction R4 est désaligné d'un angle $\theta$ par rapport à son orientation idéale (en pointillé). La figure 2B suggère aussi une autre manière d'interpréter l'action des réseaux de diffraction sur les impulsions laser ultra-rapides. On peut voir, en effet, que l'impulsion laser initiale $IL_0$ présente un front d'impulsion (ligne continue) qui est aligné avec le front de phase (ligne pointillée). Le « front d'impulsion » peut être défini comme la surface formée, à un instant donné, par les maxima de l'enveloppe temporelle de l'impulsion. Après diffraction par le réseau R1, le front d'impulsion forme un angle avec le front d'onde, et n'est donc plus perpendiculaire à la direction de propagation. Cela signifie que le pic de l'impulsion n'est pas atteint au même moment en tous les points du faisceau - il s'agit donc d'un couplage spatio-temporel, dit « PFT » de l'anglais « Pulse Front Tilt ». Le PFT introduit par le premier réseau R1 est compensé par le deuxième réseau R2 ; puis le troisième réseau R3 introduit un couplage PFT opposé qui n'est pas complètement compensé par le quatrième réseau R4 à cause de son désalignement. Ainsi, l'impulsion de sortie $IL_{PFT}$ présente un couplage PFT résiduel. En supposant un profil temporel et spectral gaussien, un front de phase plan et une absence de modulation de fréquence (« chirp »), le champ électrique d'une telle impulsion peut être exprimé de la façon suivante :

$$E(x_i, t) = E_0 \exp(-2(t - \xi x_i)^2 / \tau_i^2 - 2x_i^2 / w_i^2 + i\omega_L t)$$

$$(2)$$

où :

- $x_i$ est l'une des coordonnées transverses (x ou y, dans la notation de l'équation 1) ;
- $\xi$ est le paramètre qui caractérise l'inclinaison du front d'impulsion et qui peut s'exprimer en fs/mm ($\xi=0$ en l'absence de ce type de STC);
- $\tau_i$ est la durée de l'impulsion à une position donnée (supposée indépendante de $x_i$) ; cette durée est inférieure à celle qui serait mesurée en intégrant l'intensité sur toutes les valeurs de $x_i$ ;
- $w_i$ est le diamètre du faisceau ;
- $\omega_L$ la fréquence angulaire à centre bande.

La figure 3 montre une représentation spatio-temporelle de l'impulsion IL' exprimée par l'équation (2).

Le paramètre $\xi$ est lié à la dispersion angulaire $\frac{d\Gamma}{d\lambda}$ (où $\Gamma$ est l'angle de propagation de chaque composante spectrale par rapport à l'axe z) par la relation : $\xi = \frac{1}{c} tan^{-1}\left(\bar{\lambda}\frac{d\Gamma}{d\lambda}\right)$, $\bar{\lambda}$ étant la longueur d'onde centrale du faisceau.

Dans le cas de la ligne à retard de la figure 2A on démontre que, lorsqu'on travaille à l'ordre m=1 de diffraction des réseaux :

$$\xi = \frac{1}{c} tan^{-1}\left(\frac{\bar{\lambda}}{a}\frac{tan\, r}{cos\, i}\, \theta\right)$$

où :

- $\theta$ est l'angle de désalignement du réseau R4 ;
- a est le pas des réseaux (supposés identiques entre eux) ;
- $i$ et $r$ sont, respectivement, l'angle d'incidence et de réfraction, liés entre eux par la relation : $\sin i + \sin r = m\lambda/a$, m étant l'ordre de diffraction.

Pour générer une impulsion du type exprimé par l'équation (2), et présentant donc un couplage spatio-temporel de type PFT, il est aussi possible d'utiliser un seul élément dispersif, à la place de la ligne à retard de la figure 2B. Par exemple, une impulsion caractérisée par un paramètre $\xi \cong 2,75$ fs/mm peut être obtenue en disposant sur le trajet d'un faisceau laser à $\lambda=800$ nm un prisme en verre avec angle au sommet $\beta=3°$. Cette solution est simple et économique à mettre en oeuvre ; par contre, le paramètre $\xi$ ne peut pas être réglé de manière continue, mais seulement en changeant le prisme, alors que, dans le cas de la ligne à retard de la figure 3, le couplage spatio-temporel peut être réglé finement en agissant sur l'angle de désalignement $\theta$.

Pour générer des impulsions attosecondes, il est nécessaire de focaliser l'impulsion laser en sortie du compresseur à réseaux - exprimée par l'équation (2) - sur une cible, gazeuse ou solide. Or, en effectuant une transformée de Fourier bidimensionnelle du champ $E(x_i, t)$ on obtient la fonction $\hat{E}(x_f, \omega)$, c'est-à-dire le spectre (complexe) du champ dans le plan focal d'un élément de focalisation (lentille ou miroir concave) de longueur focale f en fonction de la coordonnée spatiale transverse $x_f$.

On trouve :

$$\hat{E}(x_f, \omega) = \frac{E_0}{4} w_i \tau_i \exp\left[ -\left( (\omega - \omega_L) + 4\frac{\xi w_i}{\tau_i \tau_f} \frac{x_f}{w_f} \right)^2 \frac{\tau_f^2}{8} - 2\frac{x_f^2}{w_f^2} \right]$$

$$(3)$$

où :

$$\tau_f = \tau_i \sqrt{1 + \left( \frac{w_i \xi}{\tau_i} \right)^2}$$

est la durée de l'impulsion en un point du plan focal ; et

$$w_f = 2\frac{\lambda f}{\pi w_i} \sqrt{1 + \left( \frac{w_i \xi}{\tau_i} \right)^2}$$

est le diamètre du faisceau focalisé.

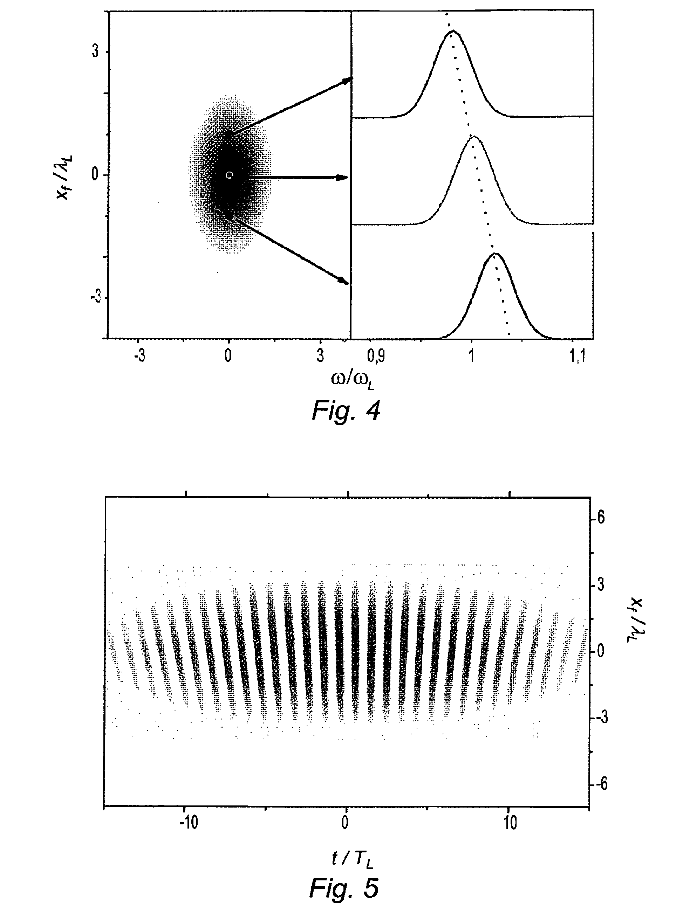

L'équation (3) montre clairement que l'impulsion focalisée présente un « chirp spatial », c'est-à-dire que son spectre varie dans l'espace le long de la direction $x_f$. La figure 4 montre les spectres mesurés en trois points du faisceau ; on peut voir que le spectre en un point avec $x_f$ positif (respectivement : négatif) est décalé vers le rouge (respectivement : vers le bleu) par rapport à celui qui est mesuré sur l'axe ($x_f$=0). Cela peut être compris en considérant que le compresseur désaligné suivi par un élément focalisant se comporte comme un spectromètre dont la résolution augmente avec l'angle $\theta$ exprimant l'erreur d'alignement entre les réseaux. Plus la valeur du paramètre $\xi$ augmente, plus la tâche focale devient elliptique, avec un axe long dans la direction du chirp spatial.

Dans le domaine ($x_f$,t), le champ électrique dans le plan focal est donné par :

$$E(x_f, t) = E_0 \frac{w_i^2}{2 w_f} \exp\left( -2\frac{t^2}{\tau_f^2} - 2\frac{x_f^2}{w_f^2} + 4i\frac{w_i \xi}{w_f \tau_f \tau_i} x_f t + i\omega_L t \right)$$

$$(4)$$

L'équation (4) ci-dessus a la même forme que l'équation (1) : l'impulsion focalisée présente donc une rotation des fronts d'onde, avec une vitesse de rotation, exprimée en mrad/fs si $w_i$ et f sont exprimés en mm et $\tau_i$ en fs :

$$v_r = \frac{w_i^2}{f \tau_i^2} \frac{\xi}{1 + \left( \frac{w_i \xi}{\tau_i} \right)^2}$$

$$(5)$$

Cela est visible aussi sur la figure 5, qui montre une représentation spatio-temporelle du champ électrique de l'impulsion laser dans le plan focal.

En supposant $w_i$, f (et donc la divergence $\theta_L$ du faisceau laser : $\theta_L$=$w_i$/f et $\tau_i$ fixés, $v_r$ prend sa valeur maximale lorsque $\xi$=$\tau_i$/$w_i$ ce qui correspond, avant focalisation, à une inclinaison du front d'impulsion de $\tau_i$ sur une distance égale au diamètre du faisceau, $w_i$. Dans le plan focal, le chirp spatial rend la tâche focale elliptique, avec une élongation d'un facteur $\sqrt{2}$ dans le plan de rotation des fronts d'onde lorsque $\xi$=$\tau_i$/$w_i$. Par ailleurs, la diminution de la largeur spectrale effective en chaque point du foyer (due à l'effet de « chirp » spatial au foyer) entraîne une augmentation de la durée d'impulsion également d'un facteur $\sqrt{2}$ lorsque $\xi$=$\tau_i$/$w_i$. Cela entraine une diminution de l'intensité de pic d'un facteur 2 seulement à l'optimum de vitesse de rotation, ce qui est généralement acceptable.

Dans ces conditions, la vitesse de rotation maximale des fronts d'onde vaut $v_r^{max}$=$\theta_L$/$2\tau_i$. Intuitivement, on comprend qu'une telle vitesse maximale est atteinte lorsque la largeur angulaire $\theta_L$ du faisceau laser est entièrement balayée pendant un temps qui est de l'ordre de grandeur de la durée minimale $\tau_i$ de l'impulsion.

Une inclinaison du front d'impulsion caractérisée par un paramètre $\xi$=$\xi^{max}$=$\tau_i$/$w_i$ peut être obtenue en utilisant un compresseur à double passage formé par deux réseaux à 1480 traits/mm formant entre eux un angle de 0,01 degré. En supposant que l'impulsion laser présente une durée initiale de 25 fs (ce qui peut être obtenu de manière conventionnelle) et soit focalisée faiblement avec $\theta_L$=0,35 rad, la vitesse de rotation des fronts d'onde dans le plan focal atteint la valeur considérable de 7 mrad/fs.

Pour qu'il soit possible d'isoler une impulsion attoseconde par filtrage spatial, il faut que l'angle de rotation $\Delta\theta$ dans l'intervalle $\Delta t$ entre l'émission de deux impulsions attosecondes consécutives soit supérieur à la divergence de chaque dite impulsion. Cela conduit, dans l'hypothèse de faisceaux gaussiens, à la relation suivante :

$$\theta_L/\theta_n \geq \alpha p N_c \qquad (6)$$

où p est le nombre d'impulsions attosecondes émises par cycle optique de l'impulsion laser (p = 2 pour l'HHG dans un gaz et p = 1 lorsque le mécanisme utilisé est celui du miroir plasma), $N_c$ le nombre de cycles optiques de ladite impulsion ($N_c$=[$\tau_i/T_L$], où $T_L$ est la période du rayonnement laser et [.] indique la partie entière), $\theta_n$ la divergence du rayonnement harmonique et $\alpha$ une constante de l'ordre de 1 qui dépend du contraste requis entre l'impulsion attoseconde sélectionnée et ses satellites.

En supposant des profils gaussiens, le contraste $\gamma$ - défini comme le rapport entre l'énergie d'une impulsion satellite et celle de l'impulsion principale - est lié au paramètre $\alpha$ par la relation :

$$\gamma = \frac{\chi(\alpha + \sqrt{\ln d}) - \chi(\alpha - \sqrt{\ln d})}{2\chi(\sqrt{\ln d})}$$

où :

$$\chi(z) = \frac{2}{\sqrt{\pi}} \int_0^z e^{-\zeta^2} d\zeta$$

désigne la fonction d'erreur de Gauss.

La valeur minimale de $\theta_n$ est donnée par $\theta_L/n$, où n est l'ordre d'harmonique le plus bas qui est sélectionné pour former l'impulsion attoseconde. On trouve qu'en utilisant une impulsion laser de 25 fs à 800 nm, focalisée avec $\theta_L$=0,35 rad sur une cible solide formant un miroir plasma, il est possible d'obtenir des impulsions attosecondes spatialement séparées entre elles (permettant d'obtenir, à l'aide d'un filtre spatial sélectionnant un pic attoseconde à sa largeur à 1/e en intensité, un contraste $\gamma$=1/e$^2$, pour $\alpha$=1,8) à la condition de ne retenir que la contribution des harmoniques d'ordre supérieur à $n_{min}$=16. Cette condition n'est pas très contraignante, car des harmoniques d'ordre beaucoup plus élevé peuvent être générés en utilisant des systèmes laser commerciaux, ce qui indique que la génération d'impulsions attosecondes isolées par le procédé de l'invention est effectivement possible.

Cette possibilité effective de générer des impulsions attosecondes isolées a été confirmée en réalisant des simulations numériques de la génération d'harmoniques d'ordre élevé (et donc d'impulsions attosecondes) par un miroir plasma en régime relativiste. Ces simulations se basent sur un modèle simple, décrit dans l'article de R. Lichters, J. Meyer-ter-Vehn et A. Pukhov « Short-Pulse laser harmonics from oscillating plasma surfaces driven at relativistic intensity », Phys. Plasmas 3, 3425 (1996).

Dans ce modèle, on considère un champ laser intense, avec un potentiel vecteur normalisé $a_0$=eE$_0$/(m$_e\omega_0$c)≥1 (où m désigne la masse de l'électron, $e$ sa charge, $\omega_0$ la fréquence angulaire centrale du laser incident, $c$ la vitesse de la lumière et $E_0$ l'amplitude du champ incident), réfléchi par un miroir oscillant à la fréquence du laser avec une vitesse de pic $v_m$=$a_0$c. La position instantanée du miroir est donnée par :

$$X(t) = (v_m/\omega_L)cos(\omega_L t)$$

et le champ électrique réfléchi vaut :

$$E_r(t) \propto \cos(\omega_L t_{ret} - kX(t_{ret}))$$

où $t_{ret}$ est le temps d'émission retardé, solution de l'équation

$$X(t_{ret}) = c(t - t_{ret})$$
.

Ce modèle a été testé - en l'absence de couplages spatio-temporels - en comparant ses résultats avec ceux obtenus par des simulations numériques basées sur la méthode « PIC » (de l'anglais « Particle In a Cell », c'est-à-dire « particule dans une cellule ») à une et deux dimensions.

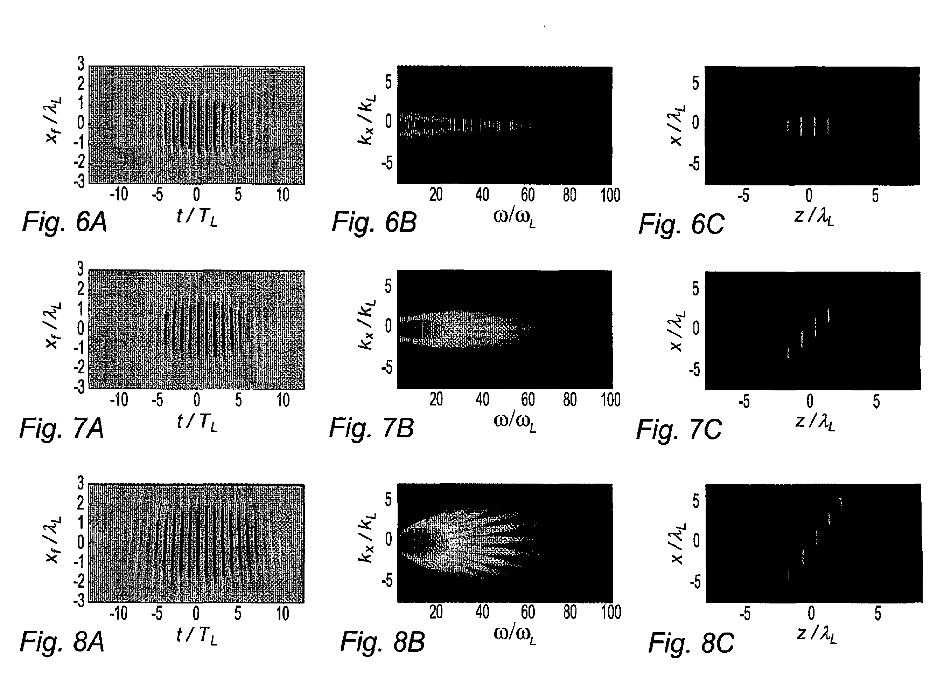

Les figures 6A - 6C illustrent la situation de référence, dans laquelle l'impulsion laser ne présente pas de couplage spatio-temporel ($\xi$=0). Plus précisément, la figure 6A montre une représentation bidimensionnelle du champ électrique de l'impulsion réfléchie par le miroir plasma, en fonction du temps (normalisé par rapport à la période optique $T_L$) et de la coordonnée transverse $x_f$ (normalisée par rapport à la longueur d'onde $\lambda_L$) ; les distorsions temporelles du champ sont dues aux oscillations du miroir, et se présentent sous la forme d'impulsions attosecondes clairement visibles. La figure 6B correspond à une transformée de Fourier bidimensionnelle de la figure 6A ; dans cette figure, la distance à l'origine correspond à la fréquence et son angle polaire à la direction de propagation. La figure 6C montre une instantanée du champ électrique réfléchi, filtré spectralement pour ne retenir que les harmoniques d'ordres 70 à 80 de l'impulsion laser génératrice, en fonction des coordonnées $x_i$ et $z_i$, en champ lointain, c'est-à-dire à une distance de la source (le miroir plasma) supérieure à la longueur de Rayleigh du rayonnement harmonique. Le train d'impulsions harmoniques se propageant le long de l'axe $z_i$ est clairement visible.

Les figures 7A - 7C correspondent au cas $\xi$ = 0,3 $\tau_i/w_i$ = 0,11 fs/mm ($w_i$=70mm, $\tau_i$=25fs, f=200mm). La rotation des fronts d'onde, à une vitesse de 3,2 mrad/fs, est clairement visible sur la figure 7A, tandis que la figure 7B montre une émission harmonique (les hautes fréquences, sur la gauche de la figure) qui se décompose en plusieurs faisceaux dont les directions de propagation forment des angles différents par rapport à l'axe $z_i$. La figure 7C montre que chacun de ces faisceaux correspond à une impulsion attoseconde distincte.

Les figures 8A - 8C correspondent au cas où le paramètre $\xi$ prend la valeur $\tau_i/w_i$=0,36fs/mm, ce qui correspond à la vitesse maximale de rotation des fronts d'onde pour ces paramètres lasers, vitesse qui vaut 7 mrad/fs. La figure 8C, en particulier, montre qu'il est possible d'isoler une impulsion attoseconde par un filtrage spatial en champ lointain, au moyen d'un simple diaphragme.

La valeur minimale de la vitesse de rotation des fronts d'onde permettant la sélection d'une impulsion attoseconde isolée dépend de plusieurs paramètres : fréquence optique de l'impulsion génératrice, ordre minimal des harmoniques retenues pour former l'impulsion attoseconde, leur divergence, contraste minimal admissible entre l'impulsion attoseconde et les satellites (qui, en général, ne pourront pas être supprimés totalement), etc. Cependant, en considérant que les impulsions attosecondes générées directement par interaction entre une impulsion laser et une cible sont espacées entre elles d'un intervalle temporel dont l'ordre de grandeur est 1 fs, et que leur divergence peut être de l'ordre de 1 mrad, voire moins, il est généralement nécessaire que cette vitesse de rotation soit supérieure ou égale à 1 mrad/fs, même si dans certains cas elle pourra être aussi faible que 100 $\mu$rad/fs, ou exceptionnellement encore moindre.

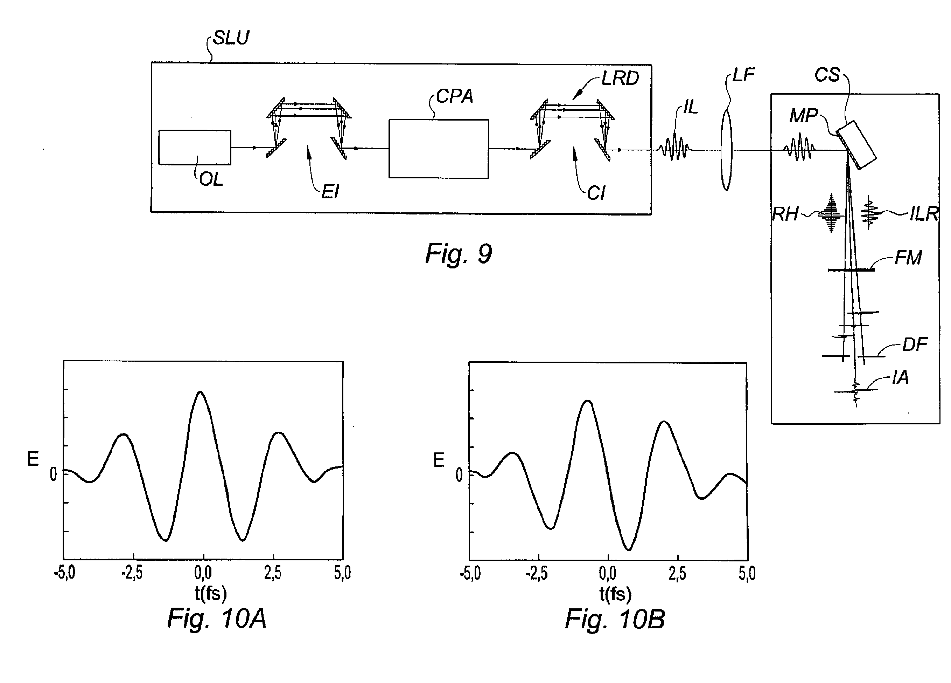

La figure 9 montre, de manière très schématique, un dispositif permettant la génération d'impulsions attosecondes isolées selon un mode de réalisation de l'invention. La référence SLU représente une source laser ultra-rapide ; d'une manière conventionnelle, elle peut comprendre un oscillateur laser à titane-saphir OL, un étireur d'impulsions CI, un amplificateur CPA pour amplifier les impulsions étirées et un compresseur CI comprenant une ligne à retard dispersive LRD, pour ramener les impulsions amplifiées à leur durée minimale. Comme dans le cas de la figure 2B, l'un des réseaux de diffraction (R4) du compresseur d'impulsions est désaligné de manière intentionnelle de manière à introduire un couplage spatio-temporel de type PFT dans l'impulsion laser de sortie IL. Un élément de focalisation LF (miroir parabolique ou lentille) focalise cette impulsion sur une cible solide CS en incidence oblique et en polarisation (linéaire) de type p. A la surface de la cible il se forme un miroir plasma MP oscillant, qui réfléchit l'impulsion laser (référence $IL_R$) tout en introduisant une distorsion temporelle qui, dans le domaine spectral, correspond à des harmoniques d'ordres élevés (rayonnement harmonique RH). Un filtre FM, constitué par exemple par une feuille métallique, élimine les composantes spectrales à plus basse fréquence du rayonnement réfléchi et ne laisse passer que les harmonique d'ordre supérieur à $n_{min}$, par exemple pris égal à 10. Ensuite, un diaphragme DF situé en champ lointain et positionnable dans un plan est utilisé pour sélectionner une seule impulsion attoseconde IA. D'une manière conventionnelle, la cible CS, le filtre FM et le diaphragme DF se trouvent à l'intérieur d'une enceinte sous vide car le rayonnement harmonique est absorbé par l'air. Par rapport à un dispositif « conventionnel » de génération de trains d'impulsions attosecondes, le dispositif de la figure 9 se caractérise uniquement par le désalignement intentionnel de la ligne à retard dispersive LRD et pas la présence du filtre spatial DF.

Plusieurs variantes du dispositif de la figure 9 peuvent être envisagées. Par exemple, la cible peut être constituée par un jet de gaz ; la sélection spectrale des harmoniques constituant les impulsions attosecondes peut être effectuée en utilisant une paire de réseaux de diffractions ; la source laser peut être d'un type différent, etc. En outre, l'utilisation d'une ligne à retard dispersive désalignée volontairement, ou d'un élément dispersif tel qu'un prisme, ne constitue pas le seul moyen d'obtenir des impulsions laser présentant une rotation des fronts d'onde : par exemple, dans les articles précités, S. Akturk et ses collaborateurs ont démontré qu'un couplage spatio-temporel de type WFR peut résulter d'une combinaison de chirp temporel et inclinaison du front d'impulsion.

La génération d'impulsions attosecondes au moyen d'impulsions laser présentant un couplage spatio-temporel de type WFR permet aussi de déterminer la phase de la porteuse desdites impulsions par rapport à leur enveloppe. Ce concept est illustré à l'aide des figures 10A et 10B, dans lesquelles :

- La figure 10A montre l'évolution du champ électrique d'une impulsion laser ayant une durée de 4 fs à une longueur d'onde centrale de 750 nm dans le cas d'une porteuse de type « cosinus » (présentant un maximum en correspondance du pic de l'enveloppe) ; et
- La figure 10B montre l'évolution du champ électrique d'une autre impulsion ayant la même enveloppe mais une porteuse « sinus » (présentant un zéro en correspondance du pic de l'enveloppe).

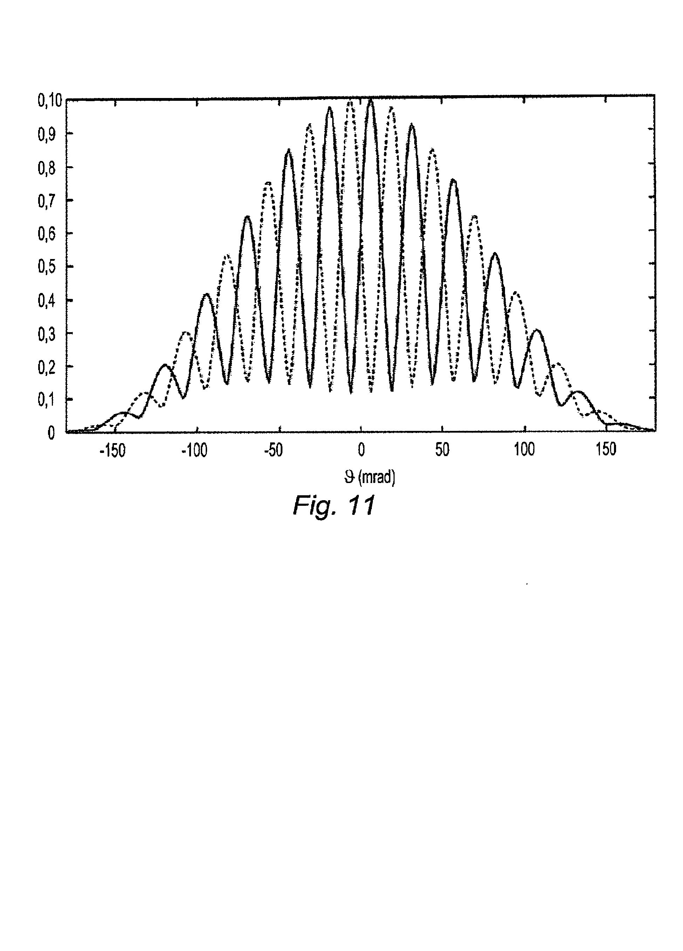

Alors même que ces deux impulsions présentent exactement le même profil temporel d'intensité, leurs champs électriques diffèrent considérablement, ce qui est susceptible d'influencer de nombreux phénomènes non-linéaires impliquant des impulsions ultra-brèves à haute intensité. Par exemple, l'instant exact d'émission des impulsions attosecondes générées par HHG dans un gaz ou par réflexion par un miroir plasma dépend de la phase de la porteuse de l'impulsion génératrice par rapport à son enveloppe. Or, lorsque ladite impulsion présente une rotation des fronts d'onde, l'instant de génération de chaque impulsion attoseconde détermine sa direction de propagation. Il s'ensuit que la phase de la porteuse de l'impulsion par rapport à son enveloppe détermine la distribution angulaire en champ lointain du rayonnement harmonique. Il suffit de mesurer cette distribution - par exemple, au moyen du dispositif de la figure 9 dans lequel on aurait remplacé le diaphragme DF par un détecteur matriciel (typiquement, une galette à microcanaux couplé à un capteur CCD) - pour déterminer cette phase, par exemple en effectuant des comparaisons avec les résultats de simulations ; pour cela on peut utiliser un moyen de traitement des données tel qu'un ordinateur conventionnel programmé d'une manière opportune. A titre d'exemple, la figure 11 montre le profil spatial en champ lointain du rayonnement harmonique, filtré pour retenir uniquement les harmoniques d'ordres 70 à 80, généré par deux impulsions femtosecondes identiques entre elles sauf en ce qui concerne les phases de leurs porteuses par rapport aux enveloppes, qui diffèrent de $\pi$ radians.

Sur la figure 11, l'axe des abscisses représente l'angle de propagation $\vartheta$ du rayonnement harmonique, en milliradians, et l'axe des ordonnées son intensité en unités arbitraires.

On remarquera que la mesure peut être effectuée en un seul tir ; par conséquent il n'est pas nécessaire que la source laser présente une phase porteuse/enveloppe stabilisée. Dans certains cas, par ailleurs, il peut être suffisant de mesurer la phase porteuse/enveloppe à une constante près, de manière à mettre en évidence ses variations sans s'intéresser à sa valeur exacte.

**Revendications**

1. Procédé de génération d'impulsions de lumière isolées de durée sub-femtoseconde comprenant les étapes consistant à :

   a. générer au moins une impulsion laser (IL) de durée pico-ou femto-seconde ;
   b. introduire un couplage spatio-temporel de ladite impulsion laser, se traduisant par une rotation temporelle de ses fronts d'onde après focalisation ;
   c. focaliser ladite impulsion laser sur une cible (JG, CS), moyennant quoi un train d'impulsions de lumière de durée sub-femtoseconde (IA) est généré, dans lequel chaque impulsion se propage selon une direction différente ;
   d. isoler une dite impulsion de lumière par filtrage spatial.

2. Procédé selon la revendication 1, dans lequel ladite étape b. comprend l'introduction d'un couplage spatio-temporel de type inclinaison du front d'impulsion avant focalisation.

3. Procédé selon la revendication 2, dans lequel ladite étape b. est mise en oeuvre au moyen d'un élément dispersif introduisant une dispersion angulaire non compensée.

**4.** Procédé selon la revendication 3, dans lequel ladite étape b. est mise en oeuvre au moyen d'une ligne à retard dispersive (LRD) comprenant une pluralité d'éléments dispersifs (R1 - R4) dont au moins un (R4) est désaligné intentionnellement.

**5.** Procédé selon l'une des revendications précédentes, dans lequel ladite cible est un jet de gaz (JG).

**6.** Procédé selon l'une des revendications 1 à 4, dans lequel ladite cible est un corps solide (CS) ou liquide formant un miroir plasma (MP).

**7.** Procédé selon l'une des revendications précédentes, dans lequel ladite étape c. comprend la focalisation de ladite impulsion laser jusqu'à une intensité supérieure ou égale à $10^{13}$ W/cm$^2$.

**8.** Procédé selon l'une des revendications précédentes dans lequel, au niveau de ladite cible, ladite impulsion laser présente une rotation de son front d'onde à une vitesse supérieure ou égale à 1 mrad/fs.

**9.** Dispositif de génération d'impulsions de lumière isolées de durée sub-femtoseconde comprenant :

- un moyen (LRD) pour introduire un couplage spatio-temporel d'au moins une impulsion laser (IL) de durée pico- ou femto-seconde;
- un système optique (LF) pour focaliser ladite impulsion laser sur une cible (JG, CS) ; et
- un filtre spatial (DF) pour sélectionner une impulsion de lumière (IA) de durée sub-femtoseconde générée par ladite cible.

**10.** Dispositif selon la revendication 9, comprenant également une cible adaptée pour générer un train d'impulsions de lumière de durée sub-femtoseconde lorsqu'elle est éclairée par une impulsion laser de durée pico-ou femtoseconde.

**11.** Dispositif selon la revendication 10 dans lequel ladite cible est choisie parmi un jet de gaz et un corps solide ou liquide formant un miroir plasma.

**12.** Dispositif selon l'une des revendications 9 à 11 dans lequel ledit moyen pour introduire un couplage spatio-temporel d'au moins une impulsion laser de durée pico- ou femto-seconde comporte un élément dispersif introduisant une dispersion angulaire non compensée.

**13.** Dispositif selon la revendication 12, dans lequel ledit élément dispersif introduisant une dispersion angulaire non compensée comprend une ligne à retard dispersive comprenant au moins deux éléments dispersifs.

**14.** Procédé de détermination de la phase de la porteuse d'une impulsion laser (IL) de durée pico- ou femto-seconde par rapport à son enveloppe comprenant les étapes consistant à :

i. introduire un couplage spatio-temporel de ladite impulsion laser, se traduisant par une rotation temporelle de ses fronts d'onde après focalisation ;
ii. focaliser ladite impulsion laser sur une cible (JG, CS) pour générer un rayonnement harmonique (RH) ;
iii. mesurer le profil spatial en champ lointain dudit rayonnement harmonique et en déduire une information sur la phase de la porteuse de ladite impulsion laser par rapport à son enveloppe.

**15.** Dispositif de détermination de la phase de la porteuse d'une impulsion laser de durée pico- ou femto-seconde par rapport à son enveloppe comprenant :

- un moyen (LRD) pour introduire un couplage spatio-temporel de ladite impulsion laser;
- un système optique (LF) pour focaliser ladite impulsion laser sur une cible (JG, CS) pour générer un rayonnement harmonique (RH) ;
- un moyen de mesure du profil spatial en champ lointain dudit rayonnement harmonique ; et
- un moyen de traitement des données pour en déduire une information sur la phase de la porteuse de ladite impulsion laser par rapport à son enveloppe.

**Patentansprüche**

1. Verfahren zur Erzeugung von isolierten Lichtpulsen mit Sub-Femtosekundendauer, umfassend die Schritte bestehend aus:

   a. Erzeugen wenigstens eines Laserpulses (IL) mit Piko- oder Femtosekundendauer;
   b. Einführen einer räumlich-zeitlichen Kopplung des Laserpulses, welche sich über eine zeitliche Rotation seiner Wellenfronten nach einer Fokussierung äußert;
   c. Fokussieren des Laserpulses auf ein Ziel (JG, CS), wodurch eine Folge von Lichtpulsen mit Sub-Femtosekundendauer (IA) erzeugt wird, in welcher jeder Puls sich entlang einer unterschiedlichen Richtung ausbreitet;
   d. Isolieren eines der Lichtpulse durch räumliche Filterung.

2. Verfahren nach Anspruch 1, wobei der Schritt b. ein Einführen einer räumlich-zeitlichen Kopplung vom Typ einer Neigung der Impulsfront vor der Fokussierung umfasst.

3. Verfahren nach Anspruch 2, wobei der Schritt b. durchgeführt wird mittels eines dispersiven Elements, welches eine nicht-kompensierte Winkeldispersion einführt.

4. Verfahren nach Anspruch 3, wobei der Schritt b. ausgeführt wird mittels einer dispersiven Verzögerungslinie (LRD), welche eine Vielzahl von dispersiven Elementen (R1-R4) umfasst, von welchen wenigstens eines (R4) gezielt versetzt ist.

5. Verfahren nach einem der vorhergehenden Ansprüche, wobei das Ziel ein Gasstrahl (JG) ist.

6. Verfahren nach einem der Ansprüche 1-4, wobei das Ziel ein Festkörper (CS) oder eine Flüssigkeit ist, welcher/welche einen Plasmaspiegel (MP) bildet.

7. Verfahren nach einem der vorhergehenden Ansprüche, wobei der Schritt c. die Fokussierung des Laserpulses bis auf eine Intensität von größer oder gleich $10^{13}$ W/cm$^2$ umfasst.

8. Verfahren nach einem der vorhergehenden Ansprüche, wobei auf Höhe des Ziels der Laserpuls eine Rotation seiner Wellenfront mit einer Geschwindigkeit von größer oder gleich 1 mrad/fs aufweist.

9. Vorrichtung zur Erzeugung von isolierten Lichtpulsen mit Sub-Femtosekundendauer, umfassend:

   - ein Mittel (LRD) zum Einführen einer räumlich-zeitlichen Kopplung wenigstens eines Laserpulses (IL) mit Piko- oder Femtosekundendauer;
   - ein optisches System (LF) zum Fokussieren des Laserpulses auf ein Ziel (JG, CS); und
   - einen räumlichen Filter (CF) zum Auswählen eines von dem Ziel erzeugten Lichtpulses (IA) mit Sub-Femtosekundendauer.

10. Vorrichtung nach Anspruch 9, umfassend außerdem ein Ziel, welches dazu ausgestaltet ist, eine Folge von Lichtpulsen mit Sub-Femtosekundendauer zu erzeugen, wenn es von einem Laserpuls mit Piko- oder Femtosekundendauer beleuchtet wird.

11. Vorrichtung nach Anspruch 10, wobei das Ziel ausgewählt ist aus einem Gasstrahl und einem Festkörper oder einer Flüssigkeit, welcher/welche einen Plasmaspiegel bildet.

12. Vorrichtung nach einem der Ansprüche 9-11, wobei das Mittel zum Einführen einer räumlich-zeitlichen Kopplung des wenigstens einen Laserpulses mit Piko- oder Femtosekundendauer ein eine nicht-kompensierte Winkeldispersion einführendes dispersives Element umfasst.

13. Vorrichtung nach Anspruch 12, wobei das eine nicht-kompensierte Winkeldispersion einführende dispersive Element eine dispersive Verzögerungslinie umfasst, welche wenigstens zwei dispersive Elemente umfasst.

14. Verfahren zur Bestimmung der Phase eines Trägers eines Laserpulses (IL) mit Piko- oder Femtosekundendauer im Verhältnis zu seiner Einhüllenden, umfassend die Schritte:

i. Einführen einer räumlich-zeitlichen Kopplung des Laserpulses, welche sich durch eine zeitliche Rotation seiner Wellenfronten nach einer Fokussierung äußert;
ii. Fokussieren des Laserpulses auf ein Ziel (JG, CS), um eine harmonische Emission (RH) zu erzeugen;
iii. Messen des räumlichen Profils im Fernfeld der harmonischen Strahlung und daraus Ableiten einer Information zu der Phase des Trägers des Laserpulses im Verhältnis zu seiner Einhüllenden.

15. Vorrichtung zur Bestimmung der Phase des Trägers eines Laserpulses mit Piko- oder Femtosekundendauer im Verhältnis zu seiner Einhüllenden, umfassend:

- ein Mittel (LRD) zum Einführen einer räumlich-zeitlichen Kopplung des Laserpulses;
- ein optisches System (LF) zum Fokussieren des Laserpulses auf ein Ziel (JG, CS), um eine harmonische Emission (RH) zu Erzeugen;
- ein Mittel zur Messung des räumlichen Profils im Fernfeld der harmonischen Emission; und
- ein Mittel zur Datenverarbeitung, um daraus eine Information zu der Phase des Trägers des Laserpulses im Verhältnis zu seiner Einhüllenden abzuleiten.

## Claims

1. Method of generating isolated light pulses of sub-femtosecond duration comprising the steps of:

    a. generating at least one laser pulse (IL) of picosecond or femtosecond duration;
    b. introducing a spatio-temporal coupling to said laser pulse resulting in a temporal rotation of its wave fronts after focusing;
    c. focusing said laser pulse on a target (JG, CS) by means of which a train of light pulses of sub-femtosecond duration (IA) is generated, in which each pulse is propagated in a different direction;
    d. isolating a said light pulse by spatial filtering.

2. Method as claimed in claim 1, wherein said step b. comprises introducing a spatio-temporal coupling of the pulse front tilt type prior to focusing.

3. Method as claimed in claim 2, wherein said step b. is implemented by means of a dispersive element introducing a non-compensated angular dispersion.

4. Method as claimed in claim 3, wherein said step b. is implemented by means of a dispersive delay line (LRD) comprising a plurality of dispersive elements (R1 - R4), at least one (R4) of which is intentionally misaligned.

5. Method as claimed in one of the preceding claims, wherein said target is a gas jet (JG).

6. Method as claimed in one of claims 1 to 4, wherein said target is a solid body (CS) or liquid forming a plasma mirror (MP).

7. Method as claimed in one of the preceding claims, wherein said step c. comprises focusing said laser pulse to an intensity greater than or equal to $10^{13}$ W/cm$^2$.

8. Method as claimed in one of the preceding claims, wherein on a level with said target, said laser pulse exhibits a rotation of its wave front at a speed greater than or equal to 1 mrad/fs.

9. Device for generating isolated light pulses of a sub-femtosecond duration comprising:

    - a means (LRD) for introducing a spatio-temporal coupling to at least one laser pulse (IL) of a picosecond or femtosecond duration;
    - an optical system (LF) for focusing said laser pulse on a target (JG, CS); and
    - a spatial filter (DF) for selecting a light pulse (IA) of a sub-femtosecond duration generated by said target.

10. Device as claimed in claim 9, further comprising a target adapted to generate a train of light pulses of sub-femtosecond duration when it is illuminated by a laser pulse of picosecond or femtosecond duration.

**11.** Device as claimed in claim 10 wherein said target is selected from a gas jet and a solid body or liquid forming a plasma mirror.

**12.** Device as claimed in one of claims 9 to 11, wherein said means for introducing a spatio-temporal coupling to at least one laser pulse of picosecond or femtosecond duration comprises a dispersive element introducing a non-compensated angular dispersion.

**13.** Device as claimed in claim 12, wherein said means for introducing a non-compensated angular dispersion comprises a dispersive delay line comprising at least two dispersive elements.

**14.** Method of determining the phase of the carrier of a laser pulse (IL) of picosecond or femtosecond duration relative to its envelope, comprising:

> i. introducing a spatio-temporal coupling to said laser pulse resulting in a temporal rotation of its wave fronts after focusing;
> ii. focusing said laser pulse on a target (JG, CS) to generate a harmonic radiation (RH);
> iii. measuring the spatial profile in the far field of said harmonic radiation and deriving information therefrom about the phase of the carrier of said laser pulse relative to its envelope.

**15.** Device for determining the phase of the carrier of a laser pulse (IL) of picosecond or femtosecond duration relative to its envelope, comprising:

> - a means (LRD) for introducing a spatio-temporal coupling to at least one laser pulse (IL) of a picosecond or femtosecond duration;
> - an optical system (LF) for focusing said laser pulse on a target (JG, CS) in order to generate a harmonic radiation (RH);
> - a means for measuring the spatial profile in the far field of said harmonic radiation; and
> - a data processing means for deriving therefrom information about the phase of the carrier of said laser pulse relative to its envelope.

*Fig. 1A*

*Fig. 1B*

*Fig. 2A*

Fig. 2B

Fig. 3

*Fig. 4*

*Fig. 5*

Fig. 6A   Fig. 6B   Fig. 6C

Fig. 7A   Fig. 7B   Fig. 7C

Fig. 8A   Fig. 8B   Fig. 8C

EP 2 715 885 B1

Fig. 9

Fig. 10A

Fig. 10B

EP 2 715 885 B1

Fig. 11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **G. STEINMEYER et al.** Frontiers in Ultrashort Pulse Génération: Pushing the Limits in Linear and Nonlinear Optics. *Science,* 19 Novembre 1999, vol. 286, 1507-1512
- **T. BRABEC ; F. KRAUSZ.** Intense few-cycles fields : Frontiers of nonlinear optics. *Reviews of Modern Physics,* vol. 72 (2), 545-591
- **P. M. PAUL et al.** Observation of a train of attosecond pulses from high harmonic generation. *Science,* 2001, vol. 292, 1689
- **C. THAURY et al.** Plasma mirrors for ultrahigh-intensity optics. *Nature Physics,* 2007, vol. 3, 424-429
- **C. THAURY ; F. QUÉRÉ.** High-order harmonic and attosecond pulse generation on plasma mirrors: basic mechanisms. *J. Phys. B: At. Mol. Opt. Phys.,* 2010, vol. 43, 213001
- **Y. NOMURA et al.** Attosecond phase locking of harmonics emitted from laser-produced plasmas. *Nature Phys.,* 2009, vol. 5, 124-128
- **E. GOULIELMAKIS et al.** Single-Cycle Nonlinear Optics. *Science,* 2008, vol. 320 (5883), 1614-1617
- **G. SANSONE et al.** Isolated Single-Cycle Attosecond Pulses. *Science,* 2006, vol. 314 (5798), 443-446
- **F. KRAUSZ ; M. IVANOV.** Attosecond Physics. *Rev. Mod. Phys.,* 2009, vol. 81, 163-234
- Spatio-Temporal Couplings in Ultrashort Pulses. *Journal of Optics,* 2010, vol. 12, 093001
- The general theory of first-order spatio-temporal distortions of Gaussian pulses and beams. *Optics Express,* 17 Octobre 2005, vol. 13 (21), 8642-8659
- **R. LICHTERS ; J. MEYER-TER-VEHN ; A. PUKHOV.** Short-Pulse laser harmonics from oscillating plasma surfaces driven at relativistic intensity. *Phys. Plasmas,* 1996, vol. 3, 3425